Europäisches Patentamt

European Patent Office

Office européen des brevets

(11) Veröffentlichungsnummer: **0 142 065**
**B1**

(12) **EUROPÄISCHE PATENTSCHRIFT**

(45) Veröffentlichungstag der Patentschrift: **23.01.91**

(51) Int. Cl.⁵: **H 04 Q 3/54, G 06 F 12/02**

(21) Anmeldenummer: **84112601.4**

(22) Anmeldetag: **18.10.84**

(54) **Schaltverfahren für Datenspeicher insbesondere in einer Fernsprechvermittlungsanlage.**

(30) Priorität: **21.10.83 DE 3338346**

(43) Veröffentlichungstag der Anmeldung:
**22.05.85 Patentblatt 85/21**

(45) Bekanntmachung des Hinweises auf die
Patenterteilung:
**23.01.91 Patentblatt 91/04**

(84) Benannte Vertragsstaaten:
**AT BE CH DE FR GB IT LI NL SE**

(56) Entgegenhaltungen:

**BELL SYSTEM TECHNICAL JOURNAL, Band 57,
Heft 2, Februar 1978, Seiten 379-428, American
Telephone and Telegraph Co., Short Hills, US; B.
KASKEY et al.: "Technology and hardware"**

**IBM TECHNICAL DISCLOSURE BULLETIN, Band
16, Heft 11, April 1974, Seiten 3630-3631, New
York, US; A.J. BOWEN: "Quickcell extension to
main storage management algorithms"**

(73) Patentinhaber: **Siemens Aktiengesellschaft
Wittelsbacherplatz 2
D-8000 München 2 (DE)**

(72) Erfinder: **Becker, Wolfgang, Dipl.-Ing.
Ferchenseestrasse 20
D-8000 München 70 (DE)**

(56) Documents cités:

**IBM TECHNICAL DISCLOSURE BULLETIN, Band
18, Heft 8, Januar 1976, Seiten 2582-2583, New
York, US; E.T. BOYLE et al.: "Space reclamation
in virtual storage systems"**

**Beschreibung**

Die Erfindung bezieht sich auf ein Schaltverfahren für Datenspeicher, insbesondere in einer Fernsprechvermittlungsanlage, in denen in einer größeren Anzahl vorgesehene systematisch angeordnete und demgemäß mittels Adressen ansteuerbare Speicherelemente Reihen von unterschiedlich vielen und demgemäß sich größenmäßig unterscheidenden sowie systematisch zusammenhängenden und dementsprechend Speicherabschnitte darstellenden Speicherelementen bilden, wobei jedoch jeder der Speicherabschnitte hinsichtlich der Speichersystematik beliebig innerhalb des Datenspeichers lokalisiert sein kann und nach Maßgabe von hinsichtlich der Speichersystematik zusammenhängenden Speicherelementen wählbar ist und dadurch lokalisiert ist, und in denen in einem Zuordnungsspeicher jeweils Adressen von Speicherabschnitten eingeschrieben sind, wobei diese Speicherung jeweils die Speicherabschnittsgröße der betreffenden Speicherabschnitte mit beinhaltet, und in denen jeweils nach einer Datenspeicherung wider frei werdende und damit für anderweitige Speichervorgänge verfügbar werdende Speicherabschnitte mittels einer die Adressen der Speicherabschnitte angebenden Adressenspeicherung in größenmäßig geordnete Gruppen von Speicherabschnitten zusammengefaßt werden, und in denen bei neuer Inanspruchnahme eines Speicherabschnittes für eine Speicherungsaufgabe je nach der hierfür benötigten Speicherungskapazität anhand der im Zuordnungsspeicher gespeicherten Anfangsadresse ein ausreichend großer Speicherabschnitt ausgewählt und dabei die Adressenspeicherung dementsprechend verändert wird.

Ein Schaltverfahren der angegebenen Art ist bereits bekannt durch das Fachbuch "Operating Systems" von Stuart E. Madnick and John J. Donovan, S. 114—129, Verlag McGraw-Hill Book Company. Das angegebene Verfahren wird auch als "Partion-Verfahren" bezeichnet. Wird ein Speicher neu in Betrieb genommen, sind also alle seine Speicherelemente frei und stehen sie für Speicherungsaufgaben zur Verfügung, so stellt der gesamte Speicher, also die Gesamtheit seiner Speicherelemente einen geschlossenen Block dar. Bei einer ersten Anforderung wird aus diesem Block ein Speicherbereich abgeteilt und dem jeweiligen Anwendungsfall zugeteilt. Der jeweilige Anwendungsfall kann ein zentrales Steuerwerk, eines von mehreren teilzentralen Steuerwerken oder eine periphere Schalteinrichtung, z.B. eine verbindungs-individuelle Schalteinrichtung (Verbindungssatz) oder eine teilnehmerindividuelle Schalteinrichtung (Teilnehmeranschlußschaltung) betreffen. Die Zuteilung erfolgt mittels einer Speicheransteuereinrichtung und wird in einem Zuteilungsspeicher eingeschrieben. Die Größenbestimmung eines für einen bestimmten Anwendungsfall zuzuteilenden Speicherabschnitts erfolgt aufgrund des in dem jeweiligen Anwendungsfall vorliegenden Bedarfes an Speicherelementen. Dieser Bedarf wird aufgrund eines festgelegten Größenrasters aufgerundet. Dieses Größenraster kann durch den jeweiligen Aufbau des betreffenden Speichers vorgegeben sein, z.B. durch eine entsprechende Zusammenfassung von Speicherelementen zu Speichereinheiten bestimmter Größe.

Bei der bekannten Anwendung des angegebenen Verfahrens werden freiwerdende und damit für neue Speicherungsaufgaben freigegebene Speicherabschnitte wieder mit allen denjenigen Teilen des Speichers zu einem Block verschmolzen, die zur Zeit für Speicherungszwecke nicht in Anspruch genommen sind. Aus diesem Block wird bei jeder erneuten Anforderung eines Speicherabschnittes vorgegebener Größe ein ihr entsprechender Speicherabschnitt abgeschnitten.

Bei Anwendung des genannten Verfahrens in bekannter Weise ist bei jedem neuen Anwendungsfall also jeweils ein Speicherabschnitt der erforderlichen Abschnittsgröße zu suchen. Da es für alle anschließenden Schreib- und Lesevorgänge im Speicher von wesentlichen Vorteil ist, wenn ein Speicherabschnitt immer eine ununterbrochene, also lückenlos zusammenhängende Reihe von Speicherelementen umfaßt, muß bei der Suche nach einem Speicherabschnitt berücksichtigt werden, daß ein Speicherabschnitt in der erforderlichen Abschnittströße gefunden wird, bei dem auch alle Speicherelemente zusammenhängend sind. Da der gesamte Speicherblock im laufenden Betrieb durch die freie Auswahl von Speicherabschnitten unterschiedlicher Abschnittsgrößen allmählich mehr und mehr zerstückelt wird, kann die Suche eines freien Speicherabschnittes in der erforderlichen Größe zunehmend schwieriger, d.h. mehr und mehr zeitaufwendig für die Speicheransteuereinrichtung, werden. Zudem kann sich aus der erwähnten Zerstückelung auch eine unbefriedigende Ausnutzung der vorhandenen Speicherkapazität ergeben.

Ein weiteres Schaltverfahren ist aus einem IBM Technical Disclosure Bulletin, Band 18, Heft 8, Januar 1976, Seiten 2582 bis 2583, "Space reclamation in virtual storage systems" bekannt. Bei diesen bekannten Verfahren werden freiwerdende Speicherabschnitte so in Gruppen zusammengefaßt, daß die verschiedenen Gruppen sich durch obere und untere Grenzwerte entsprechend dem jeweiligen Umfang der Speicherabschnitte voneinander unterschieden. Innerhalb dieser Grenzwerte weisen die Gruppen Speicherabschnitte unterschiedlichen Umfangs auf. Wird ein Speicherabschnitt angefordert, so wird anhand des jeweiligen Bedarfes an Speicherkapazität die betrieffende Gruppe angesteuert und aus der Gruppe ein solcher Speicherabschnitt ausgewählt, dessen Umfang gleich oder größer als der entsprechende Bedarf an Speicherkapazität ist. Hierbel wird der nicht benötigte Speicherplatz abgetrennt und als "Fragment" wieder wie ein eigener Speicherabschnitt behandelt.

Für die Erfindung besteht die Aufgabe, in nach den angegebenen Schaltverfahren betriebenen Speichern die Ausnutzung der vorgesehenen Gesamt-Speicherkapazität zu erhöhen und den Arbeitsaufwand d.h. Zeitaufwand für die Suche und Auswahl freier Speicherabschnitte herabzusetzen.

Die Erfindung löst die gestellte Aufgabe dadurch, daß Speicherabschnitte einer Mindestgröße und von aus ganzzahligen Vielfachen derselben gebildeten weiteren Größen vorgesehen sind, daß den verschiedenen Gruppen Speicherabschnitte der verschiedenen vorgesehenen Speicherabschnittsgrößen zugeordnet sind, wobei jedoch jeder der Gruppen Speicherabschnitte jeweils nur einer einheitlichen Speicherabschnittsgröße, also einer jeweiligen Speicherabschnitts-Einheitsgröße angehören, daß die Anfangsadressen der Speicherabschnitte jeweils gleicher Speicherabschnitts-Einheitsgröße pro Gruppe mittels einer Adressenverknüpfung zusammengefaßt sind, durch die jeweils in einem Speicherglied jeweils eines Speicherabschnittes als Hinweisadresse immer die die Anfangsadresse eines nächsten Speicherabschnittes der gleichen Speicherabschnitts-Einheitsgröße eingeschrieben ist, wodurch jeweils in einer Gruppe von Speicherabschnitten diese·adressenmäßig zu einer Kette geordnet sind, daß nur die Anfangsadressen jeweils eines ersten Speicherabschnittes jeder der Gruppen im Zuordnungsspeicher gespeichert sind, und daß bei neuer Inanspruchnahme eines Speicherabschnittes für eine Speicherungsaufgabe ein Speicherabschnitt der erforderlichen Speicherabschnitts-Einheitsgröße ausgewählt und vollständig und ausschließlich für diese Speicherungsaufgabe bereitgestellt wird un dabei aus der kettenmäßigen Adressenverknüpfung herausgelöst wird.

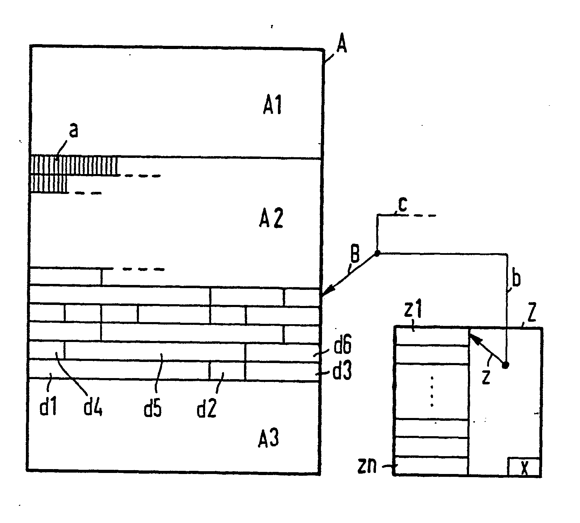

In der Zeichnung ist ein Ausführungsbeispiel für eine nach der Erfindung arbeitende Speicheranordnung dargestellt. Die Erfindung ist aus das im einzelnen beschriebenen Schaltverfahren jedoch nicht beschränkt.

Ein Datenspeicher A besteht aus mehreren Bereichen A1, A2 und A3. Der Speicherbereich A2 möge ein Arbeitsspeicher eines programmgesteuerten Zentralsteuerwerkes sein. Die Speicherbereiche A1 und A3 mögen anderen Zwecken dienen, z.B. als Programmspeicher, Betriebsdatenspeicher und dergleichen.

Im Speicherbereich A2 ist bei a angedeutet, daß der Speicher aus systematisch angeordneten Speicherelementen besteht. Die systematische Anordnung möge darin besteht, daß Speicherzeilen vorgesehen sind, und daß jede Speicherzeile eine Anzahl von Speicherelementen enthält. Gemäß der systematischen Anordnung der Speicherelemente in Speicherzeilen sind die Speicherelemente mittels Adressen ansteuerbar. Hierzu dient eine Speicheransteuereinrichtung B, die zur Ansteuerung bestimmter Speicherelemente oder zur Ansteuerung von Reihen solcher Speicherelemente jeweils eine Ansteueradresse von einem Zuordnungsspeicher Z erhält. Die Ansteuering von Speicherelementen oder von Reihen von Speicherelementen dient zum Lesen von gespeicherten Daten und/oder zum Schreiben solcher Daten. Zur Übertragung von Ansteueradressen vom Zuordnungsspeicher Z zur Ansteuereinrichtung B dient ein Übertragungsweg b, wohingegen ein Übertragungsweg c zur Übertragung von mittels der Ansteuereinrichtung B gelesenen bzw. einzuschreibenden Speicherdaten dient.

Zur Speicherung von Daten für abzuwickelnde Betriebsvorgänge, z.B. für die Herstellung einer Verbindung in Fernsprechvermittlungsanlagen, reicht bekanntlich ein einziges Speicherelement nicht aus, sondern es ist eine Anzahl von Speicherelementen für die Speicherung solcher Daten erforderlich. Hierfür sind aus den Speicherelementen Gruppen von systematisch zusammenhängenden und dementsprechend Speicherabschnitte darstellenden Speicherelementen gebildet. Die Größe einer Gruppe von Speicherelementen bestimmt sich nach dem jeweiligen Bedarf an Speicherkapazität. Die jeweils zu einer Gruppe gehörenden Speicherelemente, also die Speicherelemente eines Speicherabschnittes bestehen jeweils aus einer systematisch zusammenhängenden Reihe von Speicherelementen. In der Zeichnung sind solche Speicherabschnitte mit d1 bis d6 bezeichnet. Darüber sind in der Zeichnung weitere, nicht im einzelnen bezeichnete Speicherabschnitte dargestellt.

Die verschiedenen und verschieden großen Speicherabschnitte sind jeweils durch die Ansteueradresse eines ersten ihrer Speicherelemente, sowie durch die Anzahl von Speicherelementen pro Speicherabschnitt gekennzeichnet, also durch die jeweilige Größe des betreffenden Speicherabschnittes.

In dem Zuordnungsspeicher Z ist eine Anzahl von Speicherzeilen z1 bis zn vorgesehen. Jede dieser Speicherzeilen dient zur Speicherung jeweils der Aufangsadresse und der Speichergröße eines jeden der Speicherabschnitte d ... im Speicherbereich A2. Außerdem ist im Zuordnungsspeicher Z in Zuordnung zu jedem Speicherabschnitt die Zuordnung des jeweiligen Speicherabschnittes zu einem bestimmten Speicherauftrag eingeschrieben, also zu einem Steuerwerk, zu einer teilzentralen Steuereinrichtung, einer peripheren Schalteinrichtung (Verbindungssatz oder Teilnehmeranschlußschaltung) und dergleichen. Im Zuordnungsspeicher kann als Zuordnung außerdem gespeichert sein, um welche Art von Daten es sich handelt, z.B. um eine Serie von Wählziffern für eine Fernsprechverbindung, oder um Leitungszeichen, die im Zuge der Herstellung einer Fernsprechverbindung eintreffen und dergleichen.

Jeder der Speicherabschnitte kann also hinsichtlich der Speichersystematik beliebig innerhalb des Datenspeichers lokalisiert sein. Ein Speicherabschnitt ist nach Maßgabe von hinsichtlich der Speichersystematik zusammenhängend freien Speicherelementen wählbar und dadurch lokalisiert. Die Auswahl einer Reife von Speicherelementen für die Bildung eines Speicherabschnittes (Festlegung der Anfangsadresse und der Speicherabschnittsgröße) erfolgt nicht nur im Hinblick darauf, inwieweit systematisch zusammenhängende Speicherelemente gefunden werden können, sondern auch im Hinblick auf den jeweiligen Bedarf an Speicherkapazität. In diesem Zusammenhang ist nun vorgesehen, für die Auswahl der Größe von Speicherabschnitten nicht völlige Freizügigkeit zu lassen, sondern es ist ein Größenraster vorgesehen, auf dessen Grundlage eine Anzahl von Speicherabschnittsgrößen festgelegt ist. Die verschiedenen Speicherabschnittsgrößen mögen durch entsprechende Speichrung, z.B. im Zuordnungspeicher Z bei x, festgelegt sein. Die umfassen hinsichtlich der jeweiligen Speicherkapazität ganzzhalige Vielfache von Speicherelementen gegenüber der Anzahl von Speicherelementen bei der kleinsten vorgesehenen Speicherabschnittsgröße. In der Zeichnung sind drei verschiedene Speicherabschnittsgrößen dargestellt. Es ist möglich, auch eine größere Anzahl von Speicherabschnittsgrößen vorzusehen. Ferner besteht die Möglichkeit, die Speicherabschnittsgrößen so festzulegen, daß die verschiedenen Speicherabschnittsgrößen sich jeweils um den Faktor 2 hinsichtlich der Anzahl von enthaltenen Speicherelementen unterschieden. Die jeweilige Speicherabschnittsgröße kann im Zuordnungspeicher jeweils in Zuordnung zur betreffenden Anfangsadresse eines jeden Speicherabschnittes gespeichert sein.

Zur Ansteuerung der verschiedenen Speicherabschnitte dienen die Ansteuereinrichtung B und der Zuordnungspeicher Z. Sollen die im Zusammenhang jeweils mit einem bestimmten Betriebsvorgang und in Zuordnung zu jeweils einer Steuereinrichtung oder einer anderen Schalteinrichtung gespeicherten Daten aus dem Speicherbereich A2 gelsen werden, so wird im Zuordnungsspeicher anhand von die jeweilige Steuereinrichtung bzw. Schalteinrichtung bezeichnenden Daten mittels der Zugrilseinrichtung z die jeweilige Speicherzeile im Zuordnungsspeicher Z aufgesucht, z.B. z1, und dann wird aus dieser Speicherzeile die betreffende Anfangsadresse des Speicherabschnittes entnommen, die als Ansteueradresse an die Ansteuereinrichtung B übertragen wird. Die Ansteuereinrichtung B stellt sich dann auf den betreffenden Speicherabschnitt ein und führt einen Lesevorgang durch. In entsprechender und an sich bekannter Weise finden auch Schreibvorgänge statt.

Bei Inbetriebnahme ses Speichers mit dem Speicherbereich A2 sind in diesem zunächst noch keine Speicherabschnitte gebildet. Diese Speicherabschnitte werden gemäß dem jeweiligen Bedarf an Speicherkapazität und nach Maßgabe des erwähnten Größenrasters frei gewählt. Die einzelnen Speicherabschnitte werden sukzessive von dem Speicherbereich A2 "abgeschnitten". Dies erfolgt in systematischer Reihenfolge, wobei eine Speicherzeile nach der anderen für die Bildung solcher Speicherabschnitte herangezogenn wird. Dabei können die Speicherabschnitte unterschiedlicher Speicherabschnittsgrößen in beliebiger Reihenfolge hinsichtlich dieser Speicherabschnittsgrößen aufeinanderfolgen, wie es auch der Zeichnung zu entnehmen ist. Dabei werden Größe und Lage eines jeden Speicherabschnittes (Anzahl von Speicherelementen und jeweilige Anfangsadresse) im Zuordnungspeicher Zn festgehalten.

Nach einer Datenspeicherung wieder frei werdende und damit für anderweitige Speichervorgänge Verfügbar werdende Speicherabschnitte bleiben auch danach noch als Speicherabschnitte bestehen. Die betreffenden Angaben über Speicherabschnittsgröße und Anfangsadresse des jeweiligen Speicherabschnittes bleiben im Zuordnungsspeicher Z jeweils in einer Speicherzeile gespeichert. Lediglich die Zuordnungsdaten werden in der betreffenden Speicherzeile des Zuordnungsspeichers Z gelöst, woran erkennbar ist, daß der betreffende Speicherschnitt nach einer Datenspeicherung wieder frei geworden und damit für anderweitige Speichervorgänge verfügbar geworden ist. Solche Speicherabschnitte werden in Gruppen von Speicherabschnitten jeweils gleicher Speicherabschnittsgröße pro Gruppe mittels einer die Anfangsadressen eines jeden der Speicherabschnitte verwendende Adressenverknüpfung zusammengefaßt. Bei einer solchen Adressenverknüpfung ist bekanntlich jeweils in einem Speicherabschnitt die Anfangsadresse eines zur gleichen Gruppe gehörenden nächsten Speicherabschnittes gespeichert. Diese der Adressenverknüpfung dienenden Anfangsadressen können jeweils in einem ersten Speicherelement oder in einem letzten Speicherelement jedes der Speicherabschnitte gespeichert sein. Gemäß dieser Adressenverknüpfung ist also jeweils in einem Speicherglied eines Speicherabschnittes als Hinweisadresse die Anfangsadresse eines nächsten Speicherabschnittes gleicher Speicherabschnittsgröße eingeschrieben. Die Anfangsadressen eines ersten Speicherabschnittes jeder der Gruppen von verschieden großen Speicherabschnitten sind zusammen mit Angaben über die jeweilige Speicherabschnittsgröße pro Gruppe im Zuordnungsspeicher gespeichert.

Wurd nun für einen neuen Speicherauftrag ein Speicherabschnitt einer dem betreffenden Speicherauftrag entstrechenden Speichergröße benötigt, so wird ein Speicherabschnitt der betreffenden Speichergröße anhand der im Zuordnungsspeicher Z gespeicherten Anfangsadresse ausgewählt. Diese Inanspruchnahme eines Speicherabschnittes erfolgt also gemäß der erforderlichen Speicherabschnittsgröße. Die betreffende Anfangsadresse eines Speicherabschnittes der erfordlichen Speicherabschnittsgröße wird also dem Zuordnungsspeicher Z entnommen, wodurch dieser Speicherabschnitt also für den anschließenden Speicherungsvorgang ausgewählt ist; der betreffende Speicherabschnitt wird aus der Adreßverknüpfung herausgelöst. Im Zuordnungsspeicher Z wird nun wieder in einer der Speicherzeilen z1 bis zn festgehalten, in welcher Zuordnung der betreffende Speicherabschnitt nun steht. Diese Zuordnung gibt an, für

welche Steuereinrichtung oder andere Schalteinrichtung diejenigen Daten gespeichert sind, für die der jeweilige Speicherabschnitt ausgewählt worden ist.

Wird bei Auswahl eines Speicherabschnittes jeweils nach erforderlicher Speicherabschnittsgröße der betreffende Speicherabschnitt aus der Adreßverknüpfung herausgelöst, so wird im Zuordnungsspeicher Z für die jeweilige Gruppe von freien und für Speichervorgänge verfügbaren Speicherabschnitten eine neue Anfangsadresse gespeichert, die den jeweiligen Speicherabschnitt innerhalb die Speicherbereiches A2 lokalisiert, welcher der in der jeweiligen Gruppe von Speicherabschnitten an erster Stelle stahende Speicherabschnitt ist. Wird dann erneut ein Speicherabschnitt der gleichen Größe für einen weiteren Speicherungsvorgang in Anspruch genommen, so kann wiederum anhand der im Zuordnungsspeicher gespeicherten Anfangsadresse ein Speicherabschnitt der erforderlichen Größe gefunden werden.

## Patentanspruch

Schaltverfahren für Datenspeicher, insbesondere in einen Fernsprechvermittlungsanlage, in denen in einen größeren Anzahl vorgesehene systematisch angeordnete und demgemäß mittels Adressen ansteuerbare Speicherelemente Reihen von unterschiedlich vielen und demgemäß sich größenmäßig unterscheidenden sowie systematisch zusammenhängenden und dementsprechend Speicherabschnitte darstellenden Speicherelementen bilden, wobei jedoch jeder der Speicherabschnitte hinsichtlich der Speichersystematik beliebig innerhalb des Datenspeichers lokalisiert sein kann und nach Maßgabe von hinsichtlich der Speichersystematik zusammenhängenden Speicherelementen wählbar ist und dadurch lokalisiert ist, und in denen in einem Zuordnungsspeicher jeweils Adressen von Speicherabschnitten eingeschrieben sind, wobei diese Speicherung jeweils die Speicherabschnittsgröße der betreffenden Speicherabschnitte mit beinhaltet, und in denen jeweils nach einer Datenspeicherung wieder frei werdende und damit für anderweitige Speichervorgänge verfügbar werdende Speicherabschnitte mittels einer die Adressen der Speicherabschnitte angebenden Adressenspeicherung in größenmäßig geordnete Gruppen von Speicherabschnitten zusammengefaßt werden, und in denen bei neuer Inanspruchnahme eines Speicherabschnittes für eine Speicherungsaufgabe je nach der hierfür benötigten Speicherungskapazität anhand der im Zuordnungsspeicher gespeicherten Anfangsadresse ein ausreichend großer Speicherabschnitt ausgewählt und dabei die Adressenspeicherung dementsprechend verändert wird, dadurch gekennzeichnet, daß Speicherabschnitte (d..) einer Mindestgröße und von aus ganzzahligen Vielfachen derselben gebildeten weiteren Größen vorgesehen sind, daß den verschiedenen Gruppen Speicherabschnitte (d..) der verschiedenen vorgesehenen Speicherabschnittsgrößen zugeordnet sind, wobei jedoch jeder der Gruppen Speicherabschnitte (d..) jeweils nur einer einheitlichen Speicherabschnittsgröße, also einer jeweiligen Speicherabschnitts-Einheitsgröße angehören, daß die Anfangadressen der Speicherabschnitte (d..) jeweils gleicher Speicherabschnitts-Einheitsgröße pro Gruppe mittels einer Adressenverknüpfung zusammengefaßt sind, durch die jeweils in einem Speicherglied (z) jeweils eines Speicherabschnittes (d..) als Hinweisadresse immer die Anfangsadresse eines nächsten Speicherabschnittes (d..) der gleichen Speicherabschnitts-Einheitsgröße eingeschrieben ist, wodurch jeweils in einer Gruppe von Speicherabschnitten (d..) diese adressenmäßig zu einer Kette geordnet sind, daß nur die Anfangsadressen jeweils eines ersten Speicherabschnittes (d..) jeder der Gruppen im Zuordnungsspeicher (Z) gespeichert sind, und daß bei neuer Inanspruchnahme eines Speicherabschnittes (d..) für eine Speicherungsaufgabe ein Speicherabschnitt (d..) der erforderlichen Speicherabschnitts-Einheitsgröße ausgewählt und vollständig und ausschließlich für diese Speicherungsaufgabe bereitgestellt wird und dabei aus der kettenmäßigen Adressenverknüpfung herausgelöst wird.

## Revendication

Procédé de commutation pour des mémoires de donées, en particulier dans un central téléphonique, dans lesquelles des éléments de mémoire prévus plutôt en un grand nombre, disposés systématiquement et, en conséquence, susceptibles d'être attaqués à l'aide d'adresses, forment des rangées d'éléments de mémoire en nombre différents qui se différencient donc du point de vue de la grandeur, assemblés de façon contiguë et représentent, en conséquence des sections de mémoire, chacune des sections de mémoire pouvant, cependant, être localisée de façon quelconque dans la mémoire de données, du point de vue de la systématique de la mémoire, et étant susceptible d'être sélectionnée en fonction des éléments de mémoire assemblés de façon contiguë, du point de vue de la systématique de la mémoire, et d'être ainsi localisé, et dans lesquelles, dans une mémoire d'assignation sont inscrites des adresses de sections de mémoire, cette mémorisation incluant également la grandeur des sections de mémoire des sections de mémoire concernées, et dans lesquelles les sections de mémoire qui, après une mémorisation de données, redeviennent libres et sont donc disponibles pour d'autres processus de mémorisation, sont assemblées, à l'aide d'une mémorisation d'adresses qui indique des adresses des sections de mémoire, en des groupes de sections de mémoire ordonnées en groupe en fonction des grandeurs, et dans lesquelles, lors d'une nouvelle sollicitation d'une section de mémoire pour une opération de mémorisation, on sélectionne, en fonction de la capacité de mémorisation qui est nécessaire à cet effet et à l'aide de l'adresse d'origine mémorisée dans la mémoire d'assignation, une section de mémoire suffisamment grande, en modifiant ainsi de façon correspondante la mémorisation des adresses, caractérisé per le fait que sont prévues des sections de mémoire (d . . .) d'une grandeur minimale et d'autres grandeurs formées par des multiples entiers de celle-ci, qu'aux différents groupes sont associées des sections de mémoire (d . . .) de différentes grandeurs de sections de mémoire, alors que chacun des groupes de sections de mémoire n'appartient qu'à une grandeur de sections de mémoire unitaire, donc à une grandeur unitaire des sections de mémoire, que les adresses d'origine des sections de mémoire (d . . .) de même grandeur unitaire des sections de mémoire sont assemblées par groupes à l'aide d'une combinaison d'adresses à l'aide de laquelle on inscrit dans une unité de mémoire (Z) d'une section de mémoire (d . . .), en tant qu'indicateur, toujours l'adresse d'origine d'une section suivante (d . . .) de la mémoire de même grandeur unitaire de la section de mémoire avec pour conséquence que dans un groupe de sections de mémoire (d . . .) celles-ci sont ordonnées en une chaîne, que seules les adresses d'origine d'une première section de mémoire (d . . .) de chacun des groupes sont mémorisées dans la mémoire d'assignation (Z), et que lors d'une nouvelle sollicitation d'une section de mémoire (d . . .) pour une opération de mémorisation, une section de mémoire (d . . .) de la grandeur unitaire nécessaire de la section de mémoire est sélectionnée, et est préparée complètement et exclusivement pour cette opération de mémorisation, en étant, pour ce faire, détachée de la combinaison en chaîne de la combinaison d'adresses.

## Claim

Switching method for data memories, preferably in a telephone exchange, in which memory elements which are provided in a comparatively large number, are systematically arranged and hence can be activated by means of addresses, form rows of memory elements, which differ in terms of number and accordingly in terms of size and are systematically connected and accordingly represent memory sections, it being possible, however, in terms of the memory system, for each of the memory sections to be located anywhere within the data memory and to be selectable according to memory elements which are connected with respect to the memory system, and hence have a location, and in which addresses of memory sections are in each case written into an assignment memory, this storage including in each case the memory section size of the respective memory sections, and in which memory sections becoming free again in each case after a data storage, and hence becoming available for other memory operations, are combined, by means of an address storage specifying the addresses of the memory sections, in groups of memory sections ordered according to size, and in which, when a memory section is again utilized for a storage task, depending on a storage capacity required for this, a sufficiently large memory section is selected on the basis of the start address stored in the assignment memory, and the address storage is thereby altered accordingly, characterized in that memory sections (d . .) of a minimum size and of further sizes formed from integral multiples of the same are provided, in that memory sections (d . .) of the various memory section sizes provided are assigned to the various groups, it being the case, however, that memory sections (d . .) of in each case only one standard memory section size, that is to say of respective memory section standard size, belong to each of the groups, in that the start addresses of the memory sections (d . .) of in each case the same memory section standard size per group are combined by means of an address link, by means of which the start address of a next memory section (d . .) of the same memory section standard size is always written as pointer address in each case in a memory element (z) of in each case one memory section (d . .), as a result of which these are ordered address-wise to form a chain in each case in a group of memory sections (d . .), in that only the start addresses of in each case a first memory section (d . .) of each of the groups are stored in the assignment memory (Z), and in that when a memory section (d . .) is again utilized for a storage task, a memory section (d . .) of the required memory section standard size is selected and is made available completely and exclusively for this storage task, and is thereby removed from the chain-like address link.

A

A1

a

A2

B

c

b

d6

d3

d1   d4   d5   d2

A3

z1

Z

z

zn

X